(19) Europäisches Patentamt

European Patent Office

Office européen des brevets

(11) **EP 1 205 907 B1**

(12) **EUROPEAN PATENT SPECIFICATION**

(45) Date of publication and mention
of the grant of the patent:
**08.06.2005 Bulletin 2005/23**

(51) Int Cl.⁷: **G10L 15/06**

(21) Application number: **01124431.6**

(22) Date of filing: **11.10.2001**

(54) **Phonetic context adaptation for improved speech recognition**

Anpassung des phonetischen Kontextes zur Verbesserung der Spracherkennung

Adaptation du contexte phonétique pour l'amélioration de la reconnaissance de la parole

(84) Designated Contracting States:
**AT BE CH CY DE DK ES FI FR GB GR IE IT LI LU
MC NL PT SE TR**

(30) Priority: **14.11.2000 EP 00124795**

(43) Date of publication of application:
**15.05.2002 Bulletin 2002/20**

(73) Proprietor: **International Business Machines
Corporation
Armonk, NY 10504 (US)**

(72) Inventors:
• **Fischer, Volker, Dr.
69181 Leimen (DE)**
• **Janke, Eric-W, Dr.
Winchester, Hampshire S0235LT (GB)**
• **Kunzmann, Siegfried, Dr.
69126 Heidelberg (DE)**
• **Tyrrell, Jon
Hampshire S0535DP (GB)**

(74) Representative: **Duscher, Reinhard, Dr.
IBM Deutschland GmbH,
Intellectual Property,
Pascalstrasse 100
70548 Stuttgart (DE)**

(56) References cited:
• **FRITSCH J ET AL: "EFFECTIVE STRUCTURAL
ADAPTATION OF LVCSR SYSTEMS TO UNSEEN
DOMAINS USING HIERARCHICAL
CONNECTIONIST ACOUSTIC MODELS"
ICSLP'98, October 1998 (1998-10), page P754
XP007000546 SYDNEY (AUSTRALIA)**
• **FRITSCH J: "ACID/HNN: a framework for
hierarchical connectionist acoustic modeling"
AUTOMATIC SPEECH RECOGNITION AND
UNDERSTANDING, 1997. PROCEEDINGS., 1997
IEEE WORKSHOP ON SANTA BARBARA, CA,
USA 14-17 DEC. 1997, NEW YORK, NY,
USA,IEEE, US, 14 December 1997 (1997-12-14),
pages 164-171, XP010267508 ISBN:
0-7803-3698-4**
• **SINGH R ET AL: "DOMAIN ADDUCED STATE
TYING FOR CROSS-DOMAIN ACOUSTIC
MODELLING" EUROSPEECH 1999, vol. 4, pages
1707-1710, XP007001326 BUDAPEST
(HUNGARY)**

**Description**

**1. Background of the Invention**

**1.1 Field of the Invention**

The present invention relates to speech recognition systems. More particularly, the invention relates to a computerized method and corresponding means and a computer program product of automatically generating from a first speech recognizer a second speech recognizer said second speech recognizer adapted to a certain domain.

**1.2 Description and Disadvantages of Prior Art**

To achieve a good acoustic resolution across different speakers, domains, or other circumstances today's general purpose large vocabulary continuous speech recognizers have to be adapted to these situations which requires to determine a huge number of different parameters controlling said speech recognizers behavior. For instance, **Hidden Markov Model** (HMM) based speech recognizers usually employ several thousands of HMM states and several tens of thousands of multidimensional elementary **probability density functions** (PDFS) to capture the many variations of naturally spoken human speech. Therefore, the training of a highly accurate speech recognizer requires the reliable estimation of several millions of parameters, which is not only a time-consuming process, but also needs a substantial amount of training data.

It is well known that the recognition accuracy of a speech recognizer decreases significantly if the phonetic contexts and - as a consequence - pronunciations observed in the training data do not properly match those of the intended application. This is especially true for dialects or non-native speakers, but can also be observed when switching to other different domains for instance within the same language or to other dialects. Commercially available speech recognition products try to tackle this problem by enforcing each individual end user to enroll to the system and perform a speaker-dependent re-estimation of acoustic model parameters.

Large vocabulary continuous speech recognizers capture the many variations of speech sounds by modelling context dependent **subword units,** like e.g. phones or triphones, as elementary Hidden Markov Models. Statistical parameters of such models are usually estimated from several hundred hours of labelled training data. While this allows a high recognition accuracy if the training data sufficiently represents the task domain, it can be observed that recognition accuracy significantly decreases if phonetic contexts or acoustic model parameters are poorly estimated due to some mismatch between the training data and the intended application.

Since the collection of a large amount of training data and the subsequent training of a speech recognizer is both expensive and time consuming, the adaptation of a (general purpose) speech recognizer to a specific domain is a promising method to reduce development costs and time to market. However, today's adaptation methods either simply provide a modification of the acoustic model parameters or - to a lesser extent - select a domain specific subset from the general recognizer's phonetic context inventory.

In Fritsch J et al, "EFFECTIVE STRUCTURAL ADAPTION OF LVCSR SYSTEMS TO UNSEEN DOMAINS USING HIERARCHICAL CONNECTIONIST ACOUSTIC MODES" ICSLP'98, October 1998, page P754-757, SYDNEY (AUSTRALIA), an approach to efficiently and effectively downsize and adapt the structure of large vocabulary conversational speech recognition (LVCSR) systems on basis of hierarchical neural networks to unseen domains is presented, requiring only small amounts of transcribed adaption data. This approach allows to dynamically adapt a tree structured modelling hierarchy to differing specifity of phonetic context in new domains.

Facing both the industry's growing interest in speech recognizers for specific domains like for specialized application tasks, for language dialects or telephony services and the like, and the important role of speech as an input medium in pervasive computing, there is a definite need for improved adaptation technologies for generating new speech recognizers. The industry is searching for technologies supporting the rapid development of new data files for speaker (in-)dependent, specialized speech recognizers with improved initial recognition accuracy, and the reduction of customization efforts for individual end users or industrial software vendors.

**1.3 Objective of the Invention**

The invention is based on the objective of providing a technology for fast and easy customization of speech recognizers to a given domain.
It is a further objective to provide a technology for generating specialized speech recognizers requiring reduced computation resources, for instance in terms of computing time and memory footprints.

**2. Summary and Advantages of the Invention**

The objectives of the invention are solved by the independent claims. Further advantageous arrangements and embodiments of the invention are set forth in the respective subclaims.

The present invention relates to a computerized method and corresponding means and a computer program product for automatically generating from a first speech recognizer a second speech recognizer, said second speech recognizer being adapted to a certain domain. The first speech recognizer comprises a first acoustic model with a first decision network and its corresponding first phonetic contexts. The current invention suggests using said first acoustic model as a starting point for the adaptation process.

A second acoustic model with a second decision network and its corresponding second phonetic contexts for the second speech recognizer is generated by **re-estimating** the first decision network and said corresponding first phonetic contexts based on domain-specific training data.

As a most important advantage of the suggested approach the decision network growing procedure preserves the phonetic context information of the first speech recognizer used as a starting point. In contrast to state of the art approaches the current invention simultaneously allows for the creation of **new** phonetic contexts that need not be present in the original training material. Thus, it is possible to **adapt** the general recognizer's inventory to a new domain based on a **small** amount of adaptation data rather than to create a domain specific inventory from scratch according to the state of the art, which would require the collection of a huge amount of domain-specific training data.

**3. Brief Description of the Drawings**

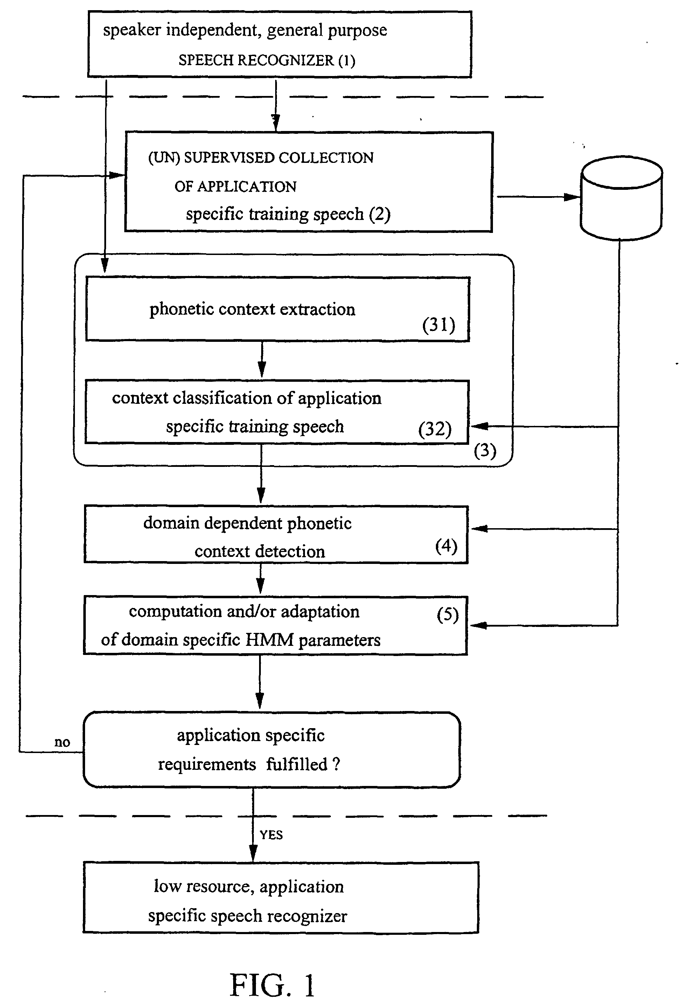

**Figure 1** is a diagram reflecting the overall structure of the proposed methodology generating a speech recognizer being tailored to a certain domain; in addition the generated speech recognizer may require reduced resources.

**4. Description of the Preferred Embodiment**

In the drawings and specification there is set forth a preferred embodiment of the invention and, although specific terms are used, the description thus given uses terminology in a generic and descriptive sense only and not for purposes of limitation.

The present invention can be realized in hardware, software, or a combination of hardware and software. Any kind of computer system - or other apparatus adapted for carrying out the methods described herein - is suited. A typical combination of hardware and software could be a general purpose computer system with a computer program that, when being loaded and executed, controls the computer system such that it carries out the methods described herein. The present invention can also be embedded in a computer program product, which comprises all the features enabling the implementation of the methods described herein, and which - when loaded in a computer system - is able to carry out these methods.

Computer program means or computer program in the present context means any expression, in any language, code or notation, of a set of instructions intended to cause a system having an information processing capability to perform a particular function either directly or after either or both of the following a) conversion to another language, code or notation; b) reproduction in a different material form.

The current invention is illustrated within the context of IBM's "ViaVoice" speech recognition system. Of course any other type of speech recognition system could be used instead.

Moreover, if the current specification is disclosing the invention for speech recognizers exploiting the technology of Hidden Markov Models (HMM) this does not indicate that the current invention cannot be applied to other approaches of speech recognizers.

**4.1 Introduction**

Todays large vocabulary continuous speech recognizers employ Hidden Markov Models to compute a word sequence **w** with maximum a posteriori probability from a speech signal *f*.

A Hidden Markov Model (HMM) is a stochastic automaton **A=($\pi$,A,B)** that operates on a finite set of **states S={$s_1$,...,$s_N$}** and allows for the observation of an output each time t, t = 1,2,...,T, a state is occupied. The initial state vector

$$\pi = [\pi_i] = [P(s(1) = s_i)], \qquad 1 \leq i \leq N, \qquad \qquad \text{(eq. 1)}$$

gives the probabilities that the HMM is in state $s_i$ at time t=1, and the transition matrix

$$A = [a_{ij}] = [P(s(t+1)=s_j|s(t)=s_i)], \qquad 1 \leq i,j \leq N, \qquad \text{(eq. 2)}$$

holds the probabilities of a first order time invariant process that describes the transitions from state $\boldsymbol{s_i}$ to $s_j$. The observations are continuous valued feature vectors $x \in \mathbb{R}$ derived from the incoming speech signal $\boldsymbol{f}$, and the output probabilities are defined by a set of **probability density functions (PDFS)**

$$B = [b_i] = [p(x|s(t)=s_i], \qquad 1 \leq i \leq N. \qquad \text{(eq. 3)}$$

For any given HMM state $s_i$ the unknown distribution $\boldsymbol{p(x|s_i)}$ of the feature vectors is approximated by a mixture of --- usually gaussian --- elementary **probability density functions (pdfs)**

$$
\begin{aligned}
p(\boldsymbol{x}|\boldsymbol{s}_i) &= \sum_{j \in M_i} (\omega_{ji} \cdot N(x|\boldsymbol{\mu}_{ji}, \Gamma_{ji})) \\
&= \sum_{j \in M_i} (\omega_{ji} \cdot |2\pi\Gamma_{ji}|^{-1/2} \cdot \exp(-(\boldsymbol{x}-\boldsymbol{\mu}_{ji})_T \Gamma_{ji}^{-1}(\boldsymbol{x}-\boldsymbol{\mu}_{ji})/2));
\end{aligned}
\qquad \text{(eq. 4)}
$$

where $\boldsymbol{M_i}$ is the set of Gaussians associated with state $\boldsymbol{s_i}$. Furthermore, $\boldsymbol{x}$ denotes the observed feature vector, $\omega_{ji}$ is the j-th mixture component weight for the i-th output distribution, and $\mu_{ji}$ and $\Gamma_{ji}$ are the mean and covariance matrix of the j-th Gaussian in state $\boldsymbol{s_i}$.

Large vocabulary continuous speech recognizers employ **acoustic subword units,** like e.g. phones or triphones, to ensure the reliable estimation of a large number of parameters and allow a dynamic incorporation of new words into the recognizer's vocabulary by the concatenation of subword models. Since it is well known that speech sounds show a huge variety with respect to different acoustic contexts, HMMs (or HMM states) usually represent context dependent acoustic subword units. Since both the training vocabulary (and thus the number and frequency of phonetic contexts) and the acoustic environment (e.g. background noise level, transmission channel characteristics, and speaker population) will differ significantly in each target application, it is the task of the further training procedure to provide a data driven identification of relevant contexts from the labeled training data.

In a bootstrap procedure for the training of a speech recognizer according to the state of the art a speaker independent, general purpose speech recognizer is used for the computation of an initial alignment between spoken words and the speech signal. In this process each frame's feature vecture is phonetically labeled and stored together with its **phonetic context,** which is defined by a fixed but arbitrary number of left and/or right neighboring phones. For example, the consideration of the left and right neighbor of a phone $\boldsymbol{P_0}$ results in the widely used **(crossword) triphone context** $(P_{-1}, P_0, P_{+1})$.

Subsequently, the identification of relevant acoustic contexts (i.e. phonetic contexts that produce significantly different acoustic feature vectors) is achieved through the construction of a binary **decision network** by means of an **iterative split-and-merge** procedure. The outcome of this bootstrap procedure is a domain independent general speech recognizer. For that purpose some sets $Q_i = \{P_1,...,P_j\}$ of language and/or domain specific phone questions are asked about the phones at positions $K_{-m},...,K_{-1},K_{+1},K_{+m}$ in the phonetic context string. These questions are of the form: "Is the phone in position $K_j$ in the set $\boldsymbol{Q_i}$?", and split a decision network node $\boldsymbol{n}$ into two successors, one node $\boldsymbol{n_L}$ (L for left side) that holds all feature vectors that give rise to a positive answer to a question, and another node $\boldsymbol{n_R}$ (R for right side) that holds the set of feature vectors that cause a negative answer. At each node of the network the best question is identified by the evaluation of a probabilistic function that measures the likelihood $\boldsymbol{P(n_L)}$ and $\boldsymbol{P(n_R)}$ of the sets of feature vectors that result from a tentative split.

In order to obtain a number of terminal nodes (or **leaves**) that allow a reliable parameter estimation the split-and-merge procedure is controlled by a problem specific threshold $\theta_{\boldsymbol{P}}$, i.e. a node $\boldsymbol{n}$ is split in two successors $\boldsymbol{n_L}$ and $\boldsymbol{n_R}$, if and only if the gain in likelihood from this split is larger than $\theta_{\boldsymbol{P}}$ :

$$P(n) < P(n_L) + P(n_R) - \theta_P \qquad \text{(eq. 5)}$$

A similar criterion is applied to merge nodes that represent only a small number of feature vectors, and other problem specific thresholds, like e.g. the minimum number of feature vectors associated with a node, are used to control the network size as well.

The process stops if a predefined number of leaves is created. All phonetic contexts associated with a leaf can not be distinguished by the sequence of phone questions that has been asked during the construction of the network and thus are members of the same **equivalence class.** Therefore, the corresponding feature vectors are considered to be homogeneous and are associated with a context dependent, single state, continuous density HMM, whose output probability is described by a gaussian mixture model (eq. 4). Initial estimates for the mixture components are obtained by clustering the feature vectors at each terminal node, and finally the **forward-backward algorithm** known in the state of the art is used to refine the mixture component parameters. It is important to note, that according to this state of the art procedure the decision network initially consist of a single node and a single equivalence class only (refer to an important deviation with respect to this feature according to the current invention discussed below), which then iteratively is refined into its final form (or in other words the bootstrapping process actually starts "without" a pre-existing decision network).

In the literature, the customization of a general speech recognizer to a particular domain is known as cross domain modeling. The state of the art in this field is described for instance by R. Singh and B. Raj and R.M. Stern, Domain adduced state tying for cross-domain acoustic modelling, 1999, Budapest, Proc. of the 6th Europ. Conf. on Speech Communication and Technology, and can be roughly divided into two different categories:

> **extrinsic modeling:** Here, a recognizer is trained using additional data from a (third) domain with phonetic contexts that are close to the special domain under consideration.
> **intrinsic modeling:** This approach requires a general purpose recognizer with a rich set of context dependent subword models. The adaptation data is used to identify those models that are relevant for a specific domain, which is usually achieved by employing a maximum likelihood criterion.

While in extrinsic modeling one can hope that a better coverage of the application domain results in an improved recognition accuracy, this approach is still time consuming and expensive, because it still requires the collection of a substantial amount of (third domain) training data. On the other hand, intrinsic modeling utilizes the fact that only a small amount of adaptation data is needed to verify the importance of a certain phonetic context. However, in contrast to the current invention, intrinsic cross domain modeling allows only fall back to **coarser** phonetic contexts (as this approach consists of a selection of a subset of the decision network and its phonetic context only), and is not able to detect any new phonetic context that is relevant to a new domain but not present in the general recognizer's inventory. Moreover, the approach is successful only if the particular domain to be addressed by intrinsic modelling is already covered (at least to a certain extent) by the acoustic model of the general speech recognizer; or in other words, the particular new domain has to be an extract (subset) of the domain the general speech recognizer is already adapted to.

**4.2 Solution**

If in the following the specification refers to a speech recognizer adapted to a certain domain, the term **"domain"** is to be understood as a generic term if not otherwise specified. A domain might refer to a certain language, a multitude of languages, a dialect or a set of dialects, a certain task area or set of task areas for which a speech recognizer might be exploited (like for instance for certain areas within the science of medicine, the specific task of recognizing numbers only, ...) and the like.

It is the original idea of the invention proposed here to use the already existing phonetic context inventory of a (general purpose) speech recognizer and some **small** amount of domain specific adaptation data for both the emphasis of dominant contexts and the creation of new phonetic contexts that are relevant for a given domain. This is achieved by using said speech recognizer's decision network and its corresponding phonetic contexts as a starting point and by **re-estimating** said decision network and phonetic contexts based on domain-specific training data. As the extensive decision network and the rich acoustic contexts of the existing speech recognizer is used as a starting point, the architecture of the proposed invention achieves minimization of both the amount of speech data needed for the training of a special domain speech recognizer, as well as the individual end users customization efforts. By upfront generation and adaptation of phonetic contexts towards a particular domain it guarantees for the rapid development of data files for speech recognizers with improved recognition accuracy for special applications.

The proposed teaching is based upon an interpretation of the training procedure of a speech recognizer as a two stage process that comprises 1.) the determination of relevant acoustic contexts and 2.) the estimation of acoustic model parameters. Adaptation techniques known the within the state of the art, like e.g. **maximum a posteriori adaptation (MAP)** or **maximum likelihood linear regression (MLLR)** aim only on the speaker dependent re-estimation of the acoustic model parameters $(\omega_{ji}, \mu_{ji}, \Gamma_{ji})$ to achieve an improved recognition accuracy; that is, these approaches are targeting exclusively the adaptation of the HMM parameters based on training data. Most important is that these approaches leave the phonetic contexts unchanged; that is, the decision network and the corresponding phonetic contexts are not modified by these technologies. In commercially available speech recognizers these methods are usually applied after gathering some training data from an individual end user.

In a previous teaching of V. Fischer, Y. Gao, S. Kunzmann, M. A. Picheny, "Speech Recognizer for Specific Domains or Dialects", PCT patent application EP 99/02673 it has been shown that upfront adaptation of a general purpose base acoustic model using a limited amount of domain or dialect dependent training data yields a better initial recognition accuracy for a broad variety of end users. Moreover it has been demonstrated by V. Fischer, S. Kunzmann, C. Waast-Ricard, "Method and System for Generating Squeezed Acoustic Models for Specialized Speech Recognizer", European patent application EP 99116684.4, that the acoustic model size can be reduced significantly without a large degradation in recognition accuracy based on a small amount of domain specific adaptation data by selecting a subset of probability density functions (PDFS) being distinctive for said domain.

**Orthogonally** to these previous approaches, the current invention proposed here focuses on the **re-estimation** of phonetic contexts, or - in other words - the adaptation of the recognizer's subword inventory to a special domain. Whereas in any speaker adaptation algorithm as well as in the above mentioned documents of V. Fischer at al. the phonetic contexts once estimated by the training procedure are fixed, it is the original idea of the proposal made here to use a small amount of upfront training data for the domain specific insertion, deletion, or adaptation of phones in their respective context. Thus re-estimation of the phonetic contexts refers to a (complete) **recalculation** of the decision network and its corresponding phonetic contexts based on the general speech recognizer decision network. This is considerably different from just "selecting" a subset of the general speech recognizer decision network and phonetic contexts or simply "enhancing" said decision network by making a leaf node an interior node attaching a new sub-tree with new leaf nodes and further phonetic contexts.

The following specification refers to Fig. 1. Fig. 1 is a diagram reflecting the overall structure of the proposed methodology of generating a speech recognizer being tailored to a certain domain giving an overview of the basic principle of the current invention; the description in the remainder of this section refers to the use of a decision network for the detection and representation of phonetic contexts and should be understood as an illustration of one particular implementation of the basic ideas. The invention suggests starting from a first speech recognizer (1) (in most cases a speaker-independent, general purpose speech recognizer) and a small, i.e. limited, amount of adaptation (training) data (2) to generate a second speech recognizer (6) (adapted based on the training data (2)). The training data (not required to exhaust the specific domain) may be gathered either supervised or unsupervised by the use of an arbitrary speech recognizer that is not neccessarily the same as in (1). After feature extraction the data is aligned against the transcription to obtain a phonetic label for each frame. Most important is, while a standard training procedure according to the state of the art as described above starts the computation of significant phonetic contexts from a single equivalence class that holds all data (a decision network with one node only), the current teaching proposes an upfront step that separates the additional data into the equivalence classes provided by the speaker independent, general purpose speech recognizer. That is, the decision network and its corresponding phonetic contexts of the first speech recognizer are used as a starting point to generate a second decision network and its corresponding second phonetic contexts for a second speech recognizer by re-estimating the first decision network and corresponding first phonetic contexts based on domain-specific training data.

Therefore, for that purpose the phonetic contexts of the existing decision network are first extracted as shown in step (31). One then passes the feature vectors and their associated phone context through the original decision network (3) by asking the phone questions that are stored with each node of the network to extract and to classify (32) said training data's phonetic contexts. As a result, one obtains a partitioning of the adaptation data that already utilizes the phonetic context information of the much larger and more general training corpus of the base system.

Subsequently, one applies the original split-and-merge algorithm for the detection of relevant new domain specific phonetic contexts (4) resulting in a new, re-estimated (domain specific) decision network and corresponding phonetic contexts. Phone questions and splitting thresholds (refer for instance to eq. 5) may depend on the domain and/or the amount of adaptation data, and thus differ from the thresholds used during the training of the baseline recognizer. Similar to the method described in the introductory section 4.1, the procedure uses a maximum likelihood criterion to evaluate all possible splits of a node and stops if the thresholds do not allow a further creation of domain dependent nodes. This way one is able to derive a new, recalculated set of equivalence classes that can be considered by construction as a domain or dialect dependent refinement of the original phonetic contexts, which further may comprise, for HMMs associated with the leaf nodes of the re-estimated decision network, a re-adjustment of the HMM parameters (5).

One important benefit from this approach lies in the fact that - as opposed to using the domain specific adaptation data in the original, state of the art (refer for instance to section 4.1 above) decision network growing procedure - the current teaching preserves the phonetic context information of the (general purpose) speech recognizer used as a starting point. Most important and in contrast to cross domain modeling techniques as described by R. Singh et al.

(refer to the discussion above) the method simultaneously allows the creation of **new** phonetic contexts that need not to be present in the original training material. The current method therefore allows the **adaptation** of the general recognizer's HMM inventory to a new domain based on a small amount of adaptation data rather than to create a domain specific HMM inventory from scratch according to the state of the art, which would require the collection of a huge amount of domain-specific training data.

As the general speech recognizer's "elaborate" decision network with its rich, well-balanced equivalence classes and its context information is exploited as a starting point, the limited, i.e. small, amount of adaptation (training) data suffices to generate the adapted speech recognizer. This saves a lot of effort in collecting domain-specific training data. Moreover, a significant speed-up in the adaptation process and an important improvement in the recognition quality of the generated adapted speech recognizer is achieved.

As with the baseline recognizer, each terminal node of the adapted (i.e. generated) decision network defines a context dependent, single state Hidden Markov Model for the specialized speech recognizer. The computation of an initial estimate for the state output probabilities (refer to eq. 4) has to consider both the history of the context adaptation process and the acoustic feature vectors associated with each terminal node of the adapted networks:

A. Phonetic contexts that are unchanged by the adaptation process are modelled by the corresponding gaussian mixture components of the base recognizer.
B. Output probabilities for newly created context dependent HMMs can be modelled either by applying above mentioned adaptation methods to the Gaussians of the original recognizer, or - if a sufficient number of feature vectors has been passed to the new terminal node - by clustering of the adaptation data.

Following the above mentioned teaching of V. Fischer et al., "Method and System for Generating Squeezed Acoustic Models for Specialized Speech Recognizer", European patent application EP 99116684.4, the adaptation data may also be used for a pruning of Gaussians in order to reduce memory footprints and CPU time. The teaching of this reference with respect to selecting a subset of HMM states of the general purpose speech recognizer used as a starting point ("Squeezing") and the teaching with respect to selecting a subset of probability-density-functions (PDFS) of the general purpose speech recognizer used as a starting point ("Pruning") both of which are distinctive of said specific domain are incorporated herewith by reference.

There are three additional important aspects of the proposed method:

1. The application of the proposed method is not limited to the upfront adaptation of domain or dialect-specific speech recognizers. Without any modification it is also applicable in a speaker adaptation scenario where it can augment the speaker dependent re-estimation of model parameters. Unsupervised speaker adaptation, which needs a substantial amount of speaker dependent data anyway, is an especially promising application scenario.
2. The method is also not limited to the adaptation of phonetic contexts to a particular domain (taking place once), but may be used **iteratively** to enhance the general recognizer's phonetic contexts incrementally based upon further training data.
3. If different languages share a common phonetic alphabet, the method can also be used for the incremental and data driven incorporation of a new language into a true multilingual speech recognizer that shares HMMs between languages.

### 4.3 Application Examples of the Current Invention

Facing the growing market of speech enabled devices that have to fulfill only a limited (application) task the invention proposed here offers an improved recognition accuracy for a wide variety of applications. A first experiment focused on the adaptation of a fairly general speech recognizer for a digit dialling task, which is an important application in the strongly expanding mobile phone market.

The following table reflects the relative word error rates for the baseline system (left), the digit domain specific recognizer (middle) and the domain adapted recognizer (right) for a general dictation and a digit recognition task:

|  | baseline | digits | adapted |
|---|---|---|---|
| dictation | 100 | 193.25 | 117.89 |
| digits | 100 | 24.87 | 47.21 |

The baseline system (**baseline,** refer to the table above) was trained with 20.000 sentences gathered from different German newspapers and office correspondence letters, and uttered by approx. 200 German speakers. Thus, the recognizer uses phonetic contexts from a mixture of different domains, which is the usual method to achieve a good phonetic coverage in the training of general purpose, large vocabulary continuous speech recognizers, like e.g. IBM's ViaVoice. The domain specific digit data consists of approx. 10.000 training utterances that consist of up to 12 spoken digits and was used for both the adaptation of the general recognizer (**adapted,** refer to the table above) according to the teaching of the current invention and the training of a digit specific recognizer (**digit,** refer to the table above).

Above table gives the (relative) word error rates (normalized to the baseline system) for the baseline system, the adapted phone context recognizer, and the digit specific system. While the baseline system shows the best performance for the general large vocabulary dictation task, it yields the worst results for the digit task. In contrast, the digit specific recognizer performs best on the digit task, but shows unacceptable error rates for the general dictation task. The rightmost column demonstrates the benefits of the context adaptation: while the error rate for the digit recognition task decreases by more than 50 percent, the adapted recognizer still shows a fairly good performance on the general dictation task.

### 4.4 Further Advantages of the Current Invention

The results presented in the previous section demonstrate that the invention described here offers further significant advantages in addition to those addressed already within the above specification.

From the discussion of the above outlined example with respect to a general speech recognizer adapted to specific domain of a digit recognition task it has been demonstrated that the current teaching is able to significantly improve the recognition rate within a given target domain.

It has to be pointed out (as also made apparent by the above mentioned example) that the current invention at the same time avoids an unacceptable decrease of recognition accuracy in the original recognizer's domain.

As the current invention uses the existing decision network and acoustic contexts of a first speech recognizer as a starting point very little additional domain specific or dialect data, which is inexpensive and easy to collect, suffices to generate a second speech recognizer.

Also due to this chosen starting point the proposed adaptation techniques are capable of reducing the time for the training of the recognizer significantly.

Finally, this provided technology allows the generation of specialized speech recognizers requiring reduced computation resources, for instance in terms of computing time and memory footprints.

All in all, the suggested technology is thus suited for the incremental and low cost integration of new application domains into any speech recognition application. It may be applied to general purpose, speaker independent speech recognizers as well as to further adaptation of speaker dependent speech recognizers.

## Claims

1. A computerized method of automatically generating from a first speech recognizer a second speech recognizer, said second speech recognizer being adapted to a certain domain,
   wherein said first speech recognizer comprising a first acoustic model with a first decision network and its corresponding first phonetic contexts, and
   said method **comprising the steps of**
   using said first acoustic model as a starting point, and
   generating a second acoustic model with a second decision network and its corresponding second phonetic contexts of said second speech recognizer by re-estimating (3, 4) said first decision network and said corresponding first phonetic contexts based on domain-specific training data,
   said method being **characterized by**
   said step of re-estimating comprising a sub-step of partitioning (3) said training data using said first decision network of said first speech recognizer.

2. A computerized method according to claim 1,
   wherein said domain-specific training data is of a limited amount only.

3. A computerized method according to claim **1,**
   wherein said sub-step of partitioning
   comprises passing said training data's feature vectors through said first decision network, and extracting and classifying (32) said training data's phonetic contexts.

4. A computerized method according to claim **1,**

wherein said step of re-estimating comprises a sub-step of detecting (4) domain-specific phonetic contexts by executing a split-and-merge methodology based on said partitioned training data for re-estimating said first decision network and said first phonetic contexts.

5. A computerized method according to claim **4**, wherein control parameters of said split-and-merge methodology are chosen specific to said domain.

6. A computerized method according to claim **4,** wherein for Hidden-Markov-Models (HMM) associated with leaf nodes of said second decision network said step of re-estimating comprises a sub-step of re-adjusting (5) HMM parameters corresponding to said HMM.

7. A computerized method according to claim **6,** wherein said HMMs comprise a set of states $S_i$ and a set of probability-density-functions (PDFS) assembling output probabilities for an observation of a speech frame in said states $S_i$, and wherein said sub-step of re-adjusting is preceded by the following sub-steps:

   a first sub-step of selecting from said states $S_i$ a subset of states being distinctive of said domain, and

   a second sub-step of selecting from said set of PDFS a subset of PDFS being distinctive of said domain.

8. A computerized method according to anyone of claims **6** or **7**, said method being executed iteratively with further training data.

9. A computerized method according to claims **6** to **8**, wherein said first and said second speech recognizer are general purpose speech recognizers, or wherein said first and said second speech recognizer are speaker-dependent speech recognizers and said training data are additional speaker-dependent training data, or wherein said first speech recognizer is a speech recognizer of at least a first language and said domain specific training data is relating to a second language and said second speech recognizer is a multi-lingual speech recognizer of said second language and said at least first language.

10. A computerized method according to anyone of above claims, wherein said domain is a language or a set of languages or a dialect thereof, or wherein said domain is a task area or a set of task areas.

11. A computer system with a memory storing a first speech recognizer, and said computer system comprising means adapted for carrying out all the steps of the method according to anyone of the preceding claims **1** to **10.**

12. A data processing program for execution in a data processing system comprising software code portions for performing a method according to anyone of the preceding claims 1 to 10 when said program is run on said computer.

13. A computer program product stored on a computer-usable medium, comprising computer-readable program means for causing a computer to perform a method according to anyone of the preceding claims 1 to 10 when said program is run on said computer.

**Patentansprüche**

1. Computergestütztes Verfahren zum automatischen Erzeugen eines zweiten Spracherkenners aus einem ersten Spracherkenner, wobei der zweite Spracherkenner an eine bestimmte Domäne angepasst ist und der erste Spracherkenner ein erstes akustisches Modell mit einem ersten Entscheidungsnetzwerk und dessen entsprechenden ersten phonetischen Kontexten umfasst, und wobei das Verfahren die folgenden Schritte umfasst:

   - Verwenden des ersten akustischen Modells als Ausgangspunkt und

   - Erzeugen eines zweiten akustischen Modells mit einem zweiten Entscheidungsnetzwerk und dessen entsprechenden zweiten phonetischen Kontexten des zweiten Spracherkenners durch Neubewerten (3, 4) des ersten Entscheidungsnetzwerks und der entsprechenden ersten phonetischen Kontexte auf der Grundlage domänenspezifischer Trainingsdaten,

wobei das Verfahren **dadurch gekennzeichnet ist, dass** der Schritt des Neubewertens einen Teilschritt des Aufteilens (3) der Trainingsdaten mit Hilfe des ersten Entscheidungsnetzwerkes des ersten Spracherkenners umfasst.

**2.** Computergestütztes Verfahren nach Anspruch 1, bei dem die domänenspezifischen Trainingsdaten nur einen beschränkten Umfang haben.

**3.** Computergestütztes Verfahren nach Anspruch 1, bei dem der Teilschritt des Aufteilens das Hindurchleiten der Merkmalvektoren der Trainingsdaten durch das erste Entscheidungsnetzwerk sowie das Extrahieren und Klassifizieren (32) der phonetischen Kontexte der Trainingsdaten umfasst.

**4.** Computergestütztes Verfahren nach Anspruch 1, bei dem der Schritt des Neubewertens einen Teilschritt des Erkennens (4) domänenspezifischer phonetischer Kontexte durch Ausführen einer Aufspalt- und zusammenfüg-Methode auf der Grundlage der aufgeteilten Trainingsdaten zur Neubewertung des ersten Entscheidungsnetzwerkes und der ersten phonetischen Kontexte umfasst.

**5.** Computergestütztes Verfahren nach Anspruch 4, bei dem die Steuerparameter dieser Aufspalt- und Zusammenfüg-Methode gemäß dieser Domäne ausgewählt werden.

**6.** Computergestütztes Verfahren nach Anspruch 4, bei dem für Hidden-Markov-Modelle (HMM), die den Blattknoten des zweiten Entscheidungsnetzwerks zugeordnet sind, der Schritt des Neubewertens einen Teilschritt des Neueinstellens (5) von HMM-Parametern entsprechend diesem HMM umfasst.

**7.** Computergestütztes Verfahren nach Anspruch 6, bei dem die HMMs eine Gruppe von Zuständen $s_i$ und eine Gruppe von Wahrscheinlichkeitsdichte-Funktionen (PDFs) umfassen, welche Ausgabewahrscheinlichkeiten für eine Beobachtung eines Sprachrahmens in den Zuständen $s_i$ bilden, und bei welchem dem Teilschritt des Neueinstellens die folgenden Teilschritte vorangehen:

- als ein erster Teilschritt das Auswählen einer Teilmenge von Zuständen, die für diese Domäne charakteristisch sind, aus den Zuständen $S_i$,

- als ein zweiter Teilschritt das Auswählen einer Teilmenge von PDFs, die für diese Domäne charakteristisch sind, aus der Gruppe der PDFs.

**8.** Computergestütztes Verfahren nach einem der Ansprüche 6 oder 7, wobei das Verfahren mit weiteren Trainingsdaten iterativ durchgeführt wird.

**9.** Computergestütztes Verfahren nach einem der Ansprüche 6 bis 8, bei welchem der erste und zweite Spracherkenner ein Universal-Spracherkenner ist, oder bei welchem der erste und zweite Spracherkenner ein sprecherabhängiger Spracherkenner ist und die Trainingsdaten zusätzliche sprecherabhängige Trainingsdaten sind, oder bei welchem der erste Spracherkenner ein erster Spracherkenner für mindestens eine erste Sprache ist, die domänenspezifischen Trainingsdaten eine zweite Sprache betreffen und es sich bei dem zweiten Spracherkenner um einen mehrsprachigen Spracherkenner für die zweite Sprache sowie die mindestens eine erste Sprache handelt.

**10.** Computergestütztes Verfahren nach einem der vorangegangenen Ansprüche, bei welchem die Domäne eine Sprache, eine Gruppe von Sprachen oder ein Dialekt dieser Sprachen ist, oder bei welchem die Domäne einen Aufgabenbereich oder eine Gruppe von Aufgabenbereichen darstellt.

11. Computersystem mit einem Speicher zum Speichern eines ersten Spracherkenners,
wobei das Computersystem Mittel umfasst, die zur Ausführung aller Schritte des Verfahrens nach einem der vorangegangenen Ansprüche 1 bis 10 angepasst sind.

12. Datenverarbeitungsprogramm zur Ausführung in einem Datenverarbeitungssystem, wobei das Datenverarbeitungsprogramm Softwarecode-Teile für die Durchführung eines Verfahrens nach einem der vorangegangenen Ansprüche 1 bis 10 umfasst, wenn das Programm auf dem Computer läuft.

13. Computerprogrammprodukt, das auf einem vom Computer verwendbaren Medium gespeichert ist und computerlesbare Programmmittel umfasst, welche die Durchführung eines Verfahrens nach einem der vorangegangenen Ansprüche 1 bis 10 auf einem Computer bewirken, wenn das Programm auf dem Computer läuft.

**Revendications**

1. Procédé informatisé consistant à générer automatiquement à partir d'un premier module de reconnaissance de la parole, un second module de reconnaissance de la parole, ledit second module de reconnaissance de la parole étant conçu pour un certain domaine,
dans lequel ledit premier module de reconnaissance de la parole comprend une première modélisation acoustique avec un premier réseau de décision et ses premiers contextes phonétiques correspondants, et
ledit procédé comprenant les étapes consistant à
utiliser ladite première modélisation acoustique en tant que point de départ, et
générer une seconde modélisation acoustique avec un second réseau de décision et ses seconds contextes phonétiques correspondants dudit second module de reconnaissance de la parole en estimant de nouveau (3, 4) ledit premier réseau de décision et lesdits premiers contextes phonétiques correspondants sur la base des données d'apprentissage spécifiques au domaine,
ledit procédé étant **caractérisé par**
ladite étape de nouvelle estimation qui comprend une sous-étape de segmentation (3) desdites données d'apprentissage en utilisant ledit premier réseau de décision dudit premier module de reconnaissance de la parole.

2. Procédé informatisé selon la revendication 1,
dans lequel lesdites données d'apprentissage spécifiques au domaine ne sont qu'en quantité limitée.

3. Procédé informatisé selon la revendication 1,
dans lequel ladite sous-étape de segmentation comprend le passage de vecteurs de caractéristiques desdites données d'apprentissage à travers ledit premier réseau de décision, et l'extraction et la classification (32) des contextes phonétiques desdites données d'apprentissage.

4. Procédé informatisé selon la revendication 1,
dans lequel ladite étape de nouvelle estimation comprend une sous-étape de détection (4) de contextes phonétiques spécifiques au domaine en exécutant une méthodologie de séparation et de réunion sur la base desdites données d'apprentissage segmentées afin d'estimer de nouveau ledit premier réseau de décision et lesdits premiers contextes phonétiques.

5. Procédé informatisé selon la revendication 4,
dans lequel des paramètres de commande de ladite méthodologie de séparation et de réunion sont choisis de façon spécifique audit domaine.

6. Procédé informatisé selon la revendication 4,
dans lequel pour les modèles de Markov cachés (HMM) associés à des noeuds des feuilles dudit second réseau de décision, ladite étape de nouvelle estimation comprend une sous-étape consistant à ajuster de nouveau (5) les paramètres de modèles HMM correspondant auxdits modèles HMM.

7. Procédé informatisé selon la revendication 6,
dans lequel lesdits modèles HMM comprennent un ensemble d'états Si et un ensemble de fonctions de densité de probabilité (PDFS) rassemblant les probabilités de sortie pour une observation d'une trame de parole dans lesdits états Si, et
dans lequel ladite sous-étape de nouvel ajustement est précédée par les sous-étapes qui suivent :

une première sous-étape consistant à sélectionner à partir desdits états Si, un sous-ensemble d'états qui est distinctif dudit domaine,

une seconde sous-étape consistant à sélectionner à partir dudit ensemble de fonctions PDFS, un autre sous-ensemble de fonctions PDFS qui est distinctif dudit domaine.

8. Procédé informatisé selon l'une quelconque des revendications 6 ou 7,
ledit procédé étant exécuté de façon itérative avec d'autres données d'apprentissage.

9. Procédé informatisé selon les revendications 6 à 8,
dans lequel ledit premier et ledit second modules de reconnaissance de la parole sont des modules de reconnaissance de la parole d'usage général, ou
dans lequel ledit premier et ledit second modules de reconnaissance de la parole sont des modules de reconnaissance de la parole dépendant du locuteur et lesdites données d'apprentissage sont des données d'apprentissage supplémentaires dépendantes du locuteur, ou
dans lequel ledit premier module de reconnaissance de la parole est un module de reconnaissance de la parole d'au moins une première langue et lesdites données d'apprentissage spécifiques au domaine se rapportent à une seconde langue et ledit second module de reconnaissance de la parole est un module de reconnaissance de la parole plurilingue de ladite seconde langue et de ladite au moins une première langue.

10. Procédé informatisé selon l'une quelconque des revendications ci-dessus,
dans lequel ledit domaine est une langue ou un ensemble de langues ou un dialecte de celle-ci, ou
dans lequel ledit domaine est un secteur de tâche ou un ensemble de secteurs de tâches.

11. Système informatique comportant une mémoire mémorisant un premier module de reconnaissance de la parole, et ledit système informatique comprenant un moyen conçu pour exécuter toutes les étapes du procédé selon l'une quelconque des revendications précédentes 1 à 10.

12. Programme de traitement de données en vue d'une exécution dans un système de traitement de données comprenant des parties de code logiciel afin d'exécuter un procédé conforme à l'une quelconque des revendications précédentes 1 à 10 lorsque ledit programme est exécuté sur ledit ordinateur.

13. Produit de programme informatique mémorisé sur un support exploitable par un ordinateur, comprenant un moyen de programme lisible par un ordinateur destiné à amener un ordinateur à exécuter un procédé conforme à l'une quelconque des revendications précédentes 1 à 10 lorsque ledit programme est exécuté sur ledit ordinateur.

```
┌─────────────────────────────────────────┐
│  speaker independent, general purpose    │
│                                          │
│       SPEECH RECOGNIZER (1)              │
└─────────────────────────────────────────┘
```

```
┌─────────────────────────────────────────┐
│  (UN) SUPERVISED COLLECTION              │
│                                          │
│        OF APPLICATION                    │
│                                          │
│     specific training speech (2)         │
└─────────────────────────────────────────┘
```

```
┌─────────────────────────────────────────┐
│  ┌───────────────────────────────────┐  │
│  │   phonetic context extraction     │  │
│  │                          (31)     │  │
│  └───────────────────────────────────┘  │
│                                          │
│  ┌───────────────────────────────────┐  │
│  │  context classification of        │  │
│  │  application                      │  │
│  │  specific training speech  (32)   │  │
│  └───────────────────────────────────┘  │
│                                    (3)   │
└─────────────────────────────────────────┘
```

```
┌─────────────────────────────────────────┐
│   domain dependent phonetic              │
│                                          │
│      context detection        (4)        │
└─────────────────────────────────────────┘
```

```
┌─────────────────────────────────────────┐
│  computation and/or adaptation   (5)     │
│                                          │
│  of domain specific HMM parameters       │
└─────────────────────────────────────────┘
```

```
┌─────────────────────────────────────────┐
│      application specific                │
│                                          │
│   requirements  fulfilled ?              │
└─────────────────────────────────────────┘
```
no

YES

```
┌─────────────────────────────────────────┐
│    low resource, application             │
│  specific speech recognizer              │
└─────────────────────────────────────────┘
```

# FIG. 1